# EUROPEAN PATENT APPLICATION

(11) **EP 1 876 718 A2**
(43) Date of publication of application: **09.01.2008**
(21) Application number: 07109753.9
(22) Date of filing: 06.06.2007
(51) Int. Cl.: H04B 1/08, H04B 1/26

(54) **DVB-H receiver chip employing diversity scheme**

(30) Priority: 03.07.2006 KR 20060061895
(71) Applicant: Integrant Technologies Inc., Gyeonggi-do 463-810 (KR)
(72) Inventor: Jeong, Minsu, Bundang-gu, Seongnam-si, Gyeonggi-do 463-718 (KR); Kim, Bonkee, 463-810, Gyeonggi-do (KR)
(74) Representative: Kastel, Stefan

(57) **Abstract**

The present invention relates to a receiver chip used in a Digital Video Broadcasting (DVB) receiver, and more particularly, to a Digital Video Broadcasting-Handheld (DVB-H) receiver chip employing a diversity scheme. In the DVB-H receiver chip according to the present invention, a first receiver block 101 and a second receiver block 102 isolated from the first receiver block are packaged within one receiver chip. An I/O terminal of the first receiver block 101 is connected to an external pin of one side 120 of the receiver chip, and an I/O terminal of the second receiver block 102 is connected to an external pin of a side 130 opposite to the one side 120 of the receiver chip. A source terminal or a control terminal of the first or second receiver block 101 or 102 is connected to the external pin of one or more of the one side 120 or the other sides 110 and 140 of the receiver chip. The first receiver block 101 comprises a first Low-Noise Amplifier (LNA) 311, a first mixer 312, a first filter 313 and a first a Variable Gain Amplifier (VGA) 314. The second receiver block 102 comprises a second LNA 321, a second mixer 322, a second filter 323 and a second VGA 324. A Voltage-Controlled Oscillator (VCO) supplies a frequency to the first and second mixers 312 and 322.

## Description

### BACKGROUND

### Field

The present invention relates to a receiver chip used in a Digital Video Broadcasting (DVB) receiver, and more particularly, to a Digital Video Broadcasting-Handheld (DVB-H) receiver chip employing a diversity scheme.

### Discussion of Related Art

A portable DVB receiver employing the diversity scheme is a receiver having two receiver antennas in the receiving terminal and implemented to receive an optimal digital video signal by using any one of the two antennas.

In this case, the diversity scheme refers to a scheme for receiving and appropriately combining several signals influenced by independent padding in order to overcome padding. For DVB reception, the diversity scheme has been used as a solution for pading caused by the multi-path of a mobile device.

However, if two DVB receiver chips are used to implement the conventional diversity scheme, the size of the receiver for receiving DVB becomes bulky, the number of the manufacturing processes increases, the price of the receiver rises, and the optimal performance of the receiver becomes difficult.

Further, if two DVB receiver chips are formed on a single PCB, a variety of terminals between the receiver chips are adjacent to each other. Accordingly, there is a disadvantage in that noise is generated due to interference.

### SUMMARY

Accordingly, the present invention is to solve at least the problems and disadvantages of the background art, and provides an arrangement structure of external pins in which a first receiver block and a second receiver block are formed as one chip and the interference between the two receiver blocks can be minimized.

In a DVB-H receiver chip employing a diversity scheme according to an embodiment of the present invention, a first receiver block 101 and a second receiver block 102 isolated from the first receiver block are packaged within one receiver chip. An I/O terminal of the first receiver block 101 is connected to an external pin of one side 120 of the receiver chip, and an I/O terminal of the second receiver block 102 is connected to an external pin of a side 130 opposite to the one side 120 of the receiver chip. A source terminal or a control terminal of the first or second receiver block 101 or 102 is connected to the external pin of one or more of the one side 120 or the other sides 110 and 140 of the receiver chip. The first receiver block 101 comprises a first Low-Noise Amplifier (LNA) 311, a first mixer 312, a first filter 313 and a first a Variable Gain Amplifier (VGA) 314. The second receiver block 102 comprises a second LNA 321, a second mixer 322, a second filter 323 and a second VGA 324. A Voltage-Controlled Oscillator (VCO) supplies a frequency to the first and second mixers 312 and 322.

In this case, the receiver chip preferably has a RF band ranging from 48MHz to 860MHz.

In this case, the receiver chip preferably has a signal band of 6MHz.

Further, the receiver chip preferably has a package type of 5 5 mm² 32pin QFN (Quad Flat-pack No-lead).

Further, the I/O terminal of the first receiver block preferably comprises an I-channel (+) terminal, an I-channel (-) terminal, a Q-channel plus (+) terminal, and a Q-channel minus (-) terminal. The I/O terminal of the second receiver block preferably comprises an I-channel (+) terminal, an I-channel (-) terminal, a Q-channel (+) terminal, and a Q-channel (-) terminal.

Furthermore, the source terminal preferably comprises a voltage terminal for supplying voltage to the receiver chip, a frequency terminal for receiving a clock, and a ground terminal for ground.

Furthermore, the control terminal preferably comprises an Inter IC (I²C) frequency terminal for receiving a frequency for I²C, and an I²C data terminal for transmitting and receiving I²C data.

In a DVB-H receiver chip employing a diversity scheme according to another embodiment of the present invention, a first receiver block 201 and a second receiver block 202 isolated from the first receiver block are packaged within one receiver chip. An I/O terminal of the first receiver block 201 is connected to an external pin of one side 220 of the receiver chip, and an I/O terminal of the second receiver block 202 is connected to an external pin of a side 230 being at right angles to the one side 220 of the receiver chip. A source terminal or a control terminal of the first or second receiver block 201 or 202 is connected to the external pin of one or more of the one side or the other sides 210 and 240 of the receiver chip. The first receiver block 201 comprises a first LNA 311, a first mixer 312, a first filter 313 and a first a VGA 314. The second receiver block 202 comprises a second LNA 321, a second mixer 322, a second filter 323 and a second VGA 324. A VCO supplies a frequency to the first and second mixers 312 and 322.

In this case, the receiver chip preferably has a package type of 5 5 mm² 32pin QFN.

### BRIEF DESCRIPTION OF THE DRAWINGS

FIG. 1 is a block diagram illustrating the arrangement of pins of a DVB-H receiver chip employing a diversity scheme according to a first embodiment of the present invention;

FIG. 2 is a block diagram illustrating the arrangement of pins of a DVB-H receiver chip employing a diversity scheme according to a second embodiment of the present invention;

FIG. 3 is a block diagram of receiver blocks for performing the diversity function described with reference to FIG. 1 or 2; and

FIG. 4 is another block diagram of receiver blocks for performing the diversity function described with reference to FIG. 1 or 2.

### DETAILED DESCRIPTION OF PREFERRED EMBODIMENTS

The present invention will now be described in detail in connection with specific embodiments with reference to the accompanying drawings.

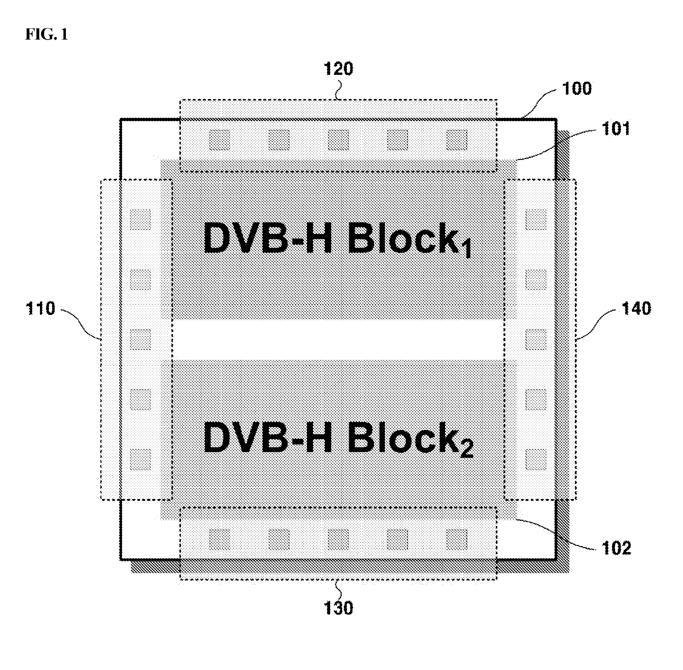

FIG. 1 is a block diagram illustrating the arrangement of pins of a DVB-H receiver chip employing the diversity scheme according to a first embodiment of the present invention.

As illustrated in FIG. 1, a DVB-H receiver chip 100 employing the diversity scheme according to a first embodiment of the present invention comprises a first receiver block 101, a second receiver block 102, one side 120, an opposite side 130 to the one side 120, and the other sides 110 and 140.

The first receiver block 101 has a portable DVB receiver circuit built therein, and constitutes one independent receiving path path1.

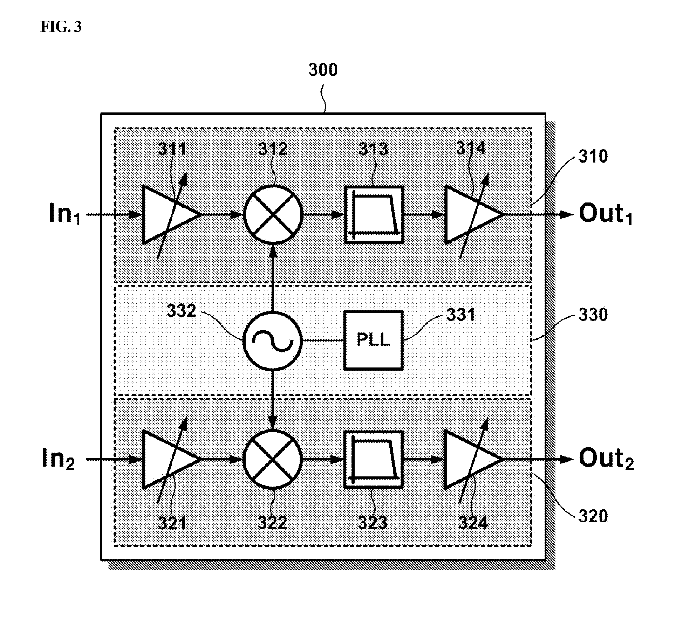

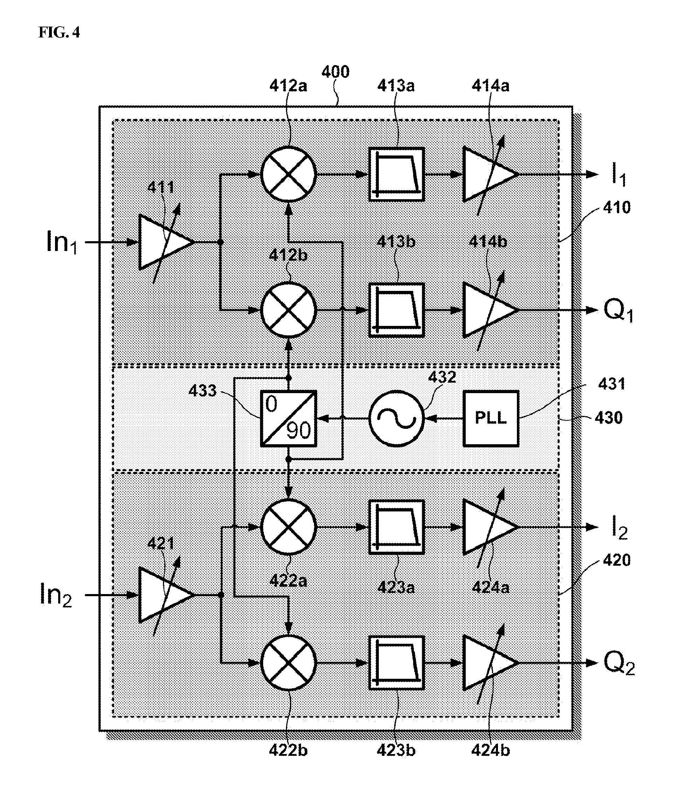

The first receiver block 101 comprises a Low-Noise Amplifier (LNA) (not illustrated), a mixer (not illustrated) and a Variable Gain Amplifier (VGA) (not illustrated). The configuration of the circuit will be described later on with reference to FIGS. 3 and 4.

The second receiver block 102 has a portable DVB receiver circuit built therein, and constitutes the other independent receiving path path2.

The second receiver block 102 comprises a LNA (not illustrated), a mixer (not illustrated) and a VGA (not illustrated). The circuit configuration is the same as that of the first receiver block 101, and can be thus understood from the following description about FIGS. 3 and 4.

The one side 120 has a terminal (not illustrated) for the input and output of the first receiver block 101.

The opposite side 130 to the one side 120 has a terminal (not illustrated) for the input and output of the second receiver block 102.

Each of the other sides 110 and 140 includes a source terminal (not illustrated) or a control terminal (not illustrated) of the first or second receiver block 101 or 102.

The first receiver block 101 and the second receiver block 102 are integrated on one DVB-H receiver chip 100.

The first receiver block 101 and the second receiver block 102 respectively have a diversity function with two different receiving paths, and are implemented as one chip.

The first receiver block 101 and the second receiver block 102 are integrated on one chip, resulting in interference occurring between the circuits. In order to prevent and eliminate such interference, the respective blocks are isolated from each other.

In other words, the arrangement of external pins can be used to provide an optimal isolation structure.

Pins are provided outside the DVB-H receiver chip 100 connected between the signal input and output parts of the first receiver block 101 and the second receiver block 102 and an external circuit.

An I/O terminal of the first receiver block 101 to and from which the signal of the first receiver block 101 is input and output is connected to an external pin disposed in the one side 120 of the DVB-H receiver chip 100.

The I/O terminal of the first receiver block 101 comprises an In-phase plus (I-channel (+)) terminal, an In-phase minus (I-channel (-)) terminal, a Quadrature-phase plus (Q-channel plus (+)) terminal and a Quadrature-phase minus (Q-channel plus (-)) terminal.

Further, an I/O terminal of the second receiver block 102 to and from which the signal of the second receiver block 102 is input and output is connected to an external pin disposed in the opposite side 130 to the one side 120 of the DVB-H receiver chip 100.

The I/O terminal of the second receiver block 102 comprises an I-channel (+) terminal, an I-channel (-) terminal, a Q-channel (+) terminal and a Q-channel (-) terminal.

In this case, as the external pin of the one side 120 to which the I/O terminal of the first receiver block 101 is connected and the external pin of the opposite side 130 to which the I/O terminal of the second receiver block 102 is connected are arranged opposite to each other. It is therefore possible to minimize the interference between the receiver circuits or the external pins that are formed independently.

Furthermore, each of the first receiver block 101 and the second receiver block 102 of the DVB-H receiver chip 100 comprises a source terminal for applying source, and a control terminal for controlling the first receiver block 101 and the second receiver block 102.

The source terminal comprises a power supply terminal (not illustrated) for applying electrical power to the DVB-H receiver chip 100, a frequency terminal (not illustrated) for receiving a clock signal, a ground terminal (not illustrated) for ground and so on.

The control terminal comprises an Inter IC (I²C) frequency terminal (not illustrated) for supplying a frequency for I²C to the DVB-H receiver chip 100, and an I²C data terminal (not illustrated) for transmitting and receiving I²C data.

The source terminal (not illustrated) and the control terminal (not illustrated) are connected to the external pin of the one side 120 of the DVB-H receiver chip 100 or one or more of the other sides 110, 130 and 140.

Due to this structure, the interference between the external pins is not generated in applying the DVB-H receiver chip 100 having the diversity function. Accordingly, not only the diversity function, but also the receiving performance of the DVB-H receiver chip 100 can be improved.

In this case, the RF band of the DVB-H receiver chip 100 ranges from 48MHz to 860MHz, the signal band of the receiver chip is 6MHz, and the size and packaging of the DVB-H receiver chip 100 are implemented to have 5 5 mm² 32pin QFN (Quad Flat-pack No-lead).

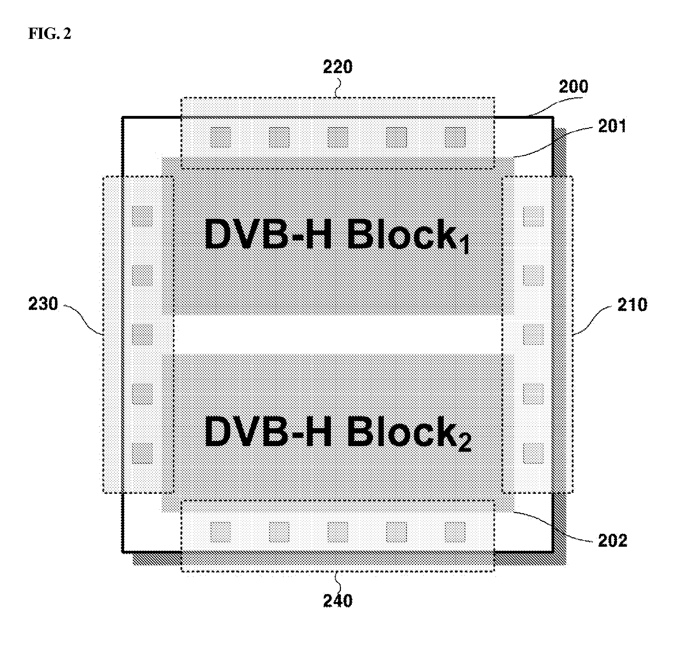

FIG. 2 is a block diagram illustrating the arrangement of pins of a DVB-H receiver chip 200 employing the diversity scheme according to a second embodiment of the present invention.

As illustrated in FIG. 2, the DVB-H receiver chip 200 employing the diversity scheme according to a second embodiment of the present invention comprises a first receiver block 201, a second receiver block 202, one side 220, a side 230 opposite to the one side 220 at right angles, and the other sides 210 and 240.

The first receiver block 201 has a portable DVB receiver circuit employing the diversity scheme built therein, and constitutes one independent receiving path path1.

The first receiver block 201 comprises a LNA (not illustrated), a mixer (not illustrated) and a VGA (not illustrated). The circuit configuration will be described with reference to FIGS. 3 and 4.

The second receiver block 202 has a portable DVB receiver circuit employing the diversity scheme built therein, and constitutes the other independent receiving path path2.

The second receiver block 202 comprises a LNA (not illustrated), a mixer (not illustrated) and a VGA (not illustrated). The circuit configuration is the same as that of the first receiver block 201, and can be thus understood from the following description about FIGS. 3 and 4.

The one side 220 has a terminal (not illustrated) for the input and output of the first receiver block 201.

The side 230 opposite to the one side 220 at right angles includes a terminal (not illustrated) for the input and output of the second receiver block 202.

The other sides 210 and 240 comprise a source terminal (not illustrated) or a control terminal (not illustrated) of the first or second receiver block 201 or 202.

The first receiver block 201 and the second receiver block 202 are integrated on one DVB-H receiver chip 200.

The first receiver block 201 and the second receiver block 202 have a diversity function with two different receiving paths and are implemented as one chip.

The first receiver block 201 and the second receiver block 202 are integrated on one chip, resulting in interference occurring between the circuits. In order to prevent and eliminate such interference, the respective blocks are isolated from each other.

In other words, the arrangement of external pins can be used to provide an optimal isolation structure.

Pins are provided outside the DVB-H receiver chip 200 connected between the signal input and output parts of the first receiver block 201 and the second receiver block 202 and an external circuit.

An I/O terminal of the first receiver block 201 to and from which the signal of the first receiver block 201 is input and output is connected to the external pin disposed in the one side 220 of the DVB-H receiver chip 200.

The I/O terminal of the first receiver block 201 comprises an I-channel (+) terminal, an I-channel (-) terminal, a Q-channel (+) terminal and a Q-channel (-) terminal.

Furthermore, an I/O terminal of the second receiver block 202 to and from which the signal of the second receiver block 202 is input and output is connected to the external pin disposed in the side 230, opposite to the one side 220 at right angles, of the DVB-H receiver chip 200.

The I/O terminal of the second receiver block 202 comprises an I-channel (+) terminal, an I-channel (-) terminal, a Q-channel (+) terminal and a Q-channel (-) terminal.

In this case, as the external pin of the one side 220 to which the I/O terminal of the first receiver block 201 is connected and the external pin of the side 230, opposite to the one side 220 at right angles, to which the I/O terminal of the second receiver block 202 is connected are arranged opposite to each other at right angles. It is therefore possible to minimize the interference between the receiver circuits or the external pins that are formed independently.

Furthermore, each of the first receiver block 201 and the second receiver block 202 of the DVB-H receiver chip 200 comprises a source terminal for applying source, and a control terminal for controlling the first receiver block 201 and the second receiver block 202.

The source terminal comprises a power supply terminal (not illustrated) for applying electrical power to the DVB-H receiver chip 200, a frequency terminal (not illustrated) for receiving a clock signal, a ground terminal (not illustrated) for ground and so on.

The control terminal comprises an I²C frequency terminal (not illustrated) for supplying a frequency for I²C to the DVB-H receiver chip 200, and an I²C data terminal (not illustrated) for transmitting and receiving I²C data.

The source terminal (not illustrated) and the control terminal (not illustrated) are connected to the external pin of the one side 220 of the DVB-H receiver chip 200 or one or more of the other sides 210, 230 and 240.

Due to this structure, interference does not occur between the external pins in applying the DVB-H receiver chip 200 having the diversity function. Accordingly, not only the diversity function, but also the receiving performance of the DVB-H receiver chip 200 can be improved.

In this case, the RF band of the DVB-H receiver chip 200 ranges from 48MHz to 860MHz, the signal band of the DVB-H receiver chip 200 is 6MHz, and the size and packaging of the DVB-H receiver chip 200 are implemented to have 5 5 mm² 32pin QFN.

FIG. 3 is a block diagram of two receiver blocks for performing the diversity function described with reference to FIG. 1 or 2.

As illustrated in FIG. 3, a DVB-H receiver chip 300 in which two receiver blocks having the diversity function are formed on one chip comprises a first receiver block 310, a second receiver block 320, a Phase-Locked Loop (PLL) 331 and a Local Oscillator (LO) 332.

Signals In1 and In2 input through an antenna include DVB RF band signals and generally refer to the frequency band of 48MHz to 860MHz. The signal band of the signals In1 and In2 is about 6MHz.

The first receiver block 310 comprises a first Low-Noise Amplifier (LNA) 311, a first mixer 312, a first Low-Pass Filter (LPF) 313 and a first Variable Gain Amplifier (VGA) 314.

The second receiver block 320 comprises a second LNA 321, a second mixer 322, a second LPF 323 and a second LNA 324, and has a structure symmetrical to the first receiver block 310.

The first LNA 311 of the first receiver block 310 amplifies a weak signal In1 received from a satellite antenna in such a way to prohibit the signal from being amplified to noise to the greatest extent, and transfers the amplified signal to the first mixer 312 of the first receiver block 310.

The PLL 331 causes the output frequency of the LO 332 to be fixed to a constant frequency without being shaken. The PLL 331 also accurately controls the voltage of a Voltage-Controlled Oscillator (VCO), which is used in the LO 332, so that the output frequency of the LO 332 is fixed to a desired frequency.

The PLL 331 comprises a frequency combiner (not illustrated) and a VCO (not illustrated). The VCO (not illustrated) can process a portable DVB-H frequency range.

The combiner consists of a 20-bit sigma-delta fractional-N architecture, and has a good noise characteristic depending on high-speed switching, an ultra-high resolution frequency and a wide band.

The LO 332 oscillates a frequency for converting a satellite signal into a base band, and generates a frequency to be supplied to the first and second mixing units 312 and 322.

The first mixer 312 of the first receiver block 310 is implemented using a down-converter mixer, and changes an input frequency to a base-band frequency signal by mixing a signal amplified in the first LNA 311 and the frequency of the LO 332.

The first LPF 313 of the first receiver block 310 selectively filters the signal of a desired frequency band from the frequency signal output from the first mixer 312.

The first VGA 314 of the first receiver block 310 can comprise a Programmable Gain Amplifier (PGA).

The construction and operation of the second receiver block 320 are the same as those of the first receiver block 310.

To select one of the signals of a base band, output through the two receiver blocks, or combine the signals is well known in the art, and will not be described in the present invention.

FIG. 4 is another block diagram of two receiver blocks for performing the diversity function described with reference to FIG. 1 or 2.

As illustrated in FIG. 4, a DVB-H receiver chip 400 in which two receiver blocks having the diversity function are formed on one chip comprises a first receiver block 410, a second receiver block 420, a PLL 431, a LO 432, and a Phase Local Oscillator (PLO) 433

In this case, it has been described that the PLL 431, the LO 432 and the PLO 433 are implemented as one, but can be implemented independently with respect to respective receiver blocks.

The first receiver block 410 comprises a first LNA 411, a first mixer 412a, a second mixer 412b, a first LPF 413a, a second LPF 413b, a second VGA 414a and a third VGA 414b.

The second receiver block 420 comprises a fourth LNA 421, a third mixer 422a, a fourth mixer 422b, a third LPF 423a, a fourth LPF 423b, a fifth VGA 424a and a sixth VGA 424b.

The first receiver block 410 and the second receiver block 420 have the same internal construction and operation in terms of a diversity characteristic. Thus, only the first receiver block 410 will be described below.

The first LNA 411 amplifies a weak signal In1 received from a satellite antenna in such a way to prohibit the signal from being amplified to noise to the greatest extent, and transfers the amplified signal to the first mixer 412a and the second mixer 412b of the first receiver block 410.

The PLL 431 causes the output frequency of the LO 432 to be fixed to a constant frequency without being shaken. The PLL 431 also controls the voltage of the VCO, which is used in the LO 432, so that the output frequency of the LO 432 is fixed to a desired frequency.

Further, though not illustrated in the drawing, the PLL 431 comprises a frequency combiner and a VCO. The VCO can process a DVB-H frequency range.

In this case, the combiner comprises a 20-bit sigma-delta fractional-N architecture, and has a good noise characteristic depending on high-speed switching, an ultra-high resolution frequency and a wide band.

The LO 432 oscillates a frequency for converting the satellite signal into a base band, and supplies the oscillated frequency to the phase LO 433.

At this time, the LO 432 has a structure from which an external LC tank circuit has been removed, and can be implemented with no need to apply a high voltage of about 30V from the outside.

The phase LO 433 generates an in-phase or quadrature-phase frequency.

The first mixer 412a functions as a down-converter, and converts an input satellite frequency into an in-phase base-band frequency signal by mixing a signal from the satellite antenna and the first LNA 411 and the frequency from the PLL 431, the LO 432 and the phase LO 433.

The second mixer 412b serves as a down-converter, and converts an input satellite frequency into a quadrature-phase base-band frequency signal by mixing a signal from the satellite antenna and the first LNA 411 and a frequency from the PLL 431, the LO 432 and the phase LO 433.

The first LPF 413a selectively filters only a signal of a desired frequency band from the in-phase frequency signal output from the first mixer 412a.

The second LPF 413b selectively filters only a signal of a desired frequency band from the quadrature-phase frequency signal output from the second mixer 412b.

The second VGA 414a and the third VGA 414b can comprise a PGA.

The frequency signal output through the second VGA 414a forms a channel I₁ by using the satellite frequency signal as the in-phase frequency signal converted into the base band.

The frequency signal output through the third VGA 414b forms a channel Q₁ by using the satellite frequency signal as the quadrature-phase frequency signal converted into the base band.

It can be understood that the operation of the second receiver block 420 is the same as that of the first receiver block 410.

As described above, the present invention is advantageous in that it can reduce interference occurring in the external pins for connecting connection terminals of a first receiver block and a second receiver block, which are included in order to apply the diversity scheme in a DVB receiver chip, to external circuits.

While the invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A Digital Video Broadcasting-Handheld (DVB-H) receiver chip,
wherein a first receiver block 101 and a second receiver block 102 isolated from the first receiver block are packaged within one receiver chip,
an I/O terminal of the first receiver block 101 is connected to an external pin of one side 120 of the receiver chip, and an I/O terminal of the second receiver block 102 is connected to an external pin of a side 130 opposite to the one side 120 of the receiver chip,
a source terminal or a control terminal of the first or second receiver block 101 or 102 is connected to the external pin of one or more of the one side 120 or the other sides 110 and 140 of the receiver chip,
wherein the first receiver block 101 comprises a first Low-Noise Amplifier (LNA) 311, a first mixer 312, a first filter 313 and a first a Variable Gain Amplifier (VGA) 314, and the second receiver block 102 comprises a second LNA 321, a second mixer 322, a second filter 323 and a second VGA 324, and a Voltage-Controlled Oscillator (VCO) supplies a frequency to the first and second mixers 312 and 322.

2. The DVB-H receiver chip of claim 1, wherein the receiver chip has a RF band ranging from 48MHz to 860MHz.

3. The DVB-H receiver chip of claim 1, wherein the receiver chip has a signal band of 6MHz.

4. The DVB-H receiver chip of claim 1, wherein the receiver chip has a package type of 5 5 mm² 32pin QFN (Quad Flat-pack No-lead).

5. The DVB-H receiver chip of claim 1, wherein:
the I/O terminal of the first receiver block comprises:
an In-phase plus (I-channel (+)) terminal;
an In-phase minus (I-channel (-)) terminal;
a Quadrature-phase plus (Q-channel plus (+)) terminal; and
a Quadrature-phase minus (Q-channel minus (-)) terminal, and
the I/O terminal of the second receiver block comprises:
an I-channel (+) terminal;
an I-channel (-) terminal;
a Q-channel (+) terminal; and
a Q-channel (-) terminal.

6. The DVB-H receiver chip of claim 1, wherein the source terminal comprises:
a voltage terminal for supplying voltage to the receiver chip;
a frequency terminal for receiving a clock; and
a ground terminal for ground.

7. The DVB-H receiver chip of claim 1, wherein the control terminal comprises:
an Inter IC (I²C) frequency terminal for receiving a frequency for I²C; and
an I²C data terminal for transmitting and receiving I²C data.

8. A Digital Video Broadcasting-Handheld (DVB-H) receiver chip,
wherein a first receiver block 201 and a second receiver block 202 isolated from the first receiver block are packaged within one receiver chip,
an I/O terminal of the first receiver block 201 is connected to an external pin of one side 220 of the receiver chip, and an I/O terminal of the second receiver block 202 is connected to an external pin of a side 230 being at right angles to the one side 220 of the receiver chip,
a source terminal or a control terminal of the first or second receiver block 201 or 202 is connected to the external pin of one or more of the one side or the other sides 210 and 240 of the receiver chip,
wherein the first receiver block 201 comprises a first LNA 311, a first mixer 312, a first filter 313 and a first a VGA 314, and the second receiver block 202 comprises a second LNA 321, a second mixer 322, a second filter 323 and a second VGA 324, and
a VCO supplies a frequency to the first and second mixers 312 and 322.

9. The DVB-H receiver chip of claim 8, wherein the receiver chip has a package type of 5 5 mm² 32pin QFN.
